# EUROPEAN PATENT SPECIFICATION

(11) **EP 2 903 486 B1**
(45) Date of publication and mention of the grant of the patent: **12.06.2019**
(21) Application number: 13844376.7
(22) Date of filing: 03.10.2013
(51) Int. Cl.: A47J 27/12, A47J 43/04, A47J 36/16, A47J 43/044, A47J 27/00

(54) **AUTO STIR COOKING APPLIANCE**
KOCHVORRICHTUNG MIT AUTOMATISCHEM UMRÜHREN
APPAREIL DE CUISSON PAR AUTO-BRASSAGE

(30) Priority: 03.10.2012 US 201261709320 P; 11.03.2013 US 201361776079 P; 19.08.2013 CN 201320504720 U
(43) Date of publication of application: 12.08.2015
(73) Proprietor: Sunbeam Products, Inc., Boca Raton, FL 33431 (US)
(72) Inventor: RANDALL, Larry, Coral Springs, FL 33067 (US); HAMMAD, Jamal, Boynton Beach, FL 33437 (US)
(74) Representative: Intès, Didier Gérard André
(86) International application number: PCT/US2013/063259
(87) International publication number: WO 2014/055759

(56) References cited:
- DE-A1- 3 045 308
- DE-A1- 3 045 371
- JP-A- 2005 052 238
- JP-U- S50 118 166
- KR-B1- 100 503 442
- US-A- 4 019 221
- US-A- 4 339 992
- US-A- 5 816 136
- US-A1- 2008 257 168
- US-A1- 2012 189 745

## Description

### FIELD OF THE INVENTION

The invention relates to cooking appliances, and in particular, to a slow cooker appliance with an automatic stirring mechanism. More particularly, the invention relates to a slow cooker appliance including a lid that may be provided with an automated stirring mechanism for selective automatic stirring of food items inside of the cooking vessel.

### BACKGROUND OF THE INVENTION

Current slow cookers are commonly constructed using a transparent lid, a cooking vessel made from earth ware (stoneware), a housing that contains a heater, and a controller for switching power on and off. The slow cooker is used to slowly cook foods over an extended period of time (typically 4-8 hours). The food items are placed in the slow cooker and are left to cook. This method usually produces good results but there are some drawbacks. For example, the food may not be cooked consistently, some foods may burn on the edges of the earth ware, and there me be a film of grease and dried foods on top of the food. Notably, documents US 2008/0257168 and US 5 816 136 are known and disclose devices for stirring and cooking food.

### SUMMARY OF THE INVENTION

Briefly, the present invention provides a slow cooker according to appended claim 1.

In one aspect, at least one embodiment of the invention provides a slow cooker including a housing with a heating element positioned therein, a cooking vessel configured to be positioned within the housing for heating via the heating element and a lid configured to be positioned on the cooking vessel to substantially close a generally open end thereof. A motor handle is attached to the lid such that a motor shaft thereof extends through an aperture in the lid. The motor includes a control board configured to selectively activate the motor in a pre-determined interval sequence wherein at the beginning of each interval the motor is activated for a given time and then the motor is deactivated until the beginning of the next interval.

In another aspect, at least one embodiment of the invention provides a slow cooker including a housing with a heating element positioned therein, a cooking vessel configured to be positioned within the housing for heating via the heating element and a lid configured to be positioned on the cooking vessel to substantially close a generally open end thereof. The lid defines an aperture therethrough and has a saddle positioned about the aperture. A handle is configured to releasably attach to the saddle. The handle has a plug or motor shaft extending therefrom which is configured to pass into the lid aperture when the handle is attached to the saddle.

In another aspect, at least one embodiment of the invention provides a slow cooker including a housing with a heating element positioned therein, a cooking vessel configured to be positioned within the housing for heating via the heating element and a lid configured to be positioned on the cooking vessel to substantially close a generally open end thereof The lid includes at least one lid clip with an attachment body secured to a portion of the lid and a flexible engaging member pivotally connected to the attachment body and configured to releasably engage the cooking vessel rim.

### BRIEF DESCRIPTION OF THE DRAWINGS

The accompanying drawings, which are incorporated herein and constitute part of this specification, illustrate the presently preferred embodiments of the invention, and, together with the general description given above and the detailed description given below, serve to explain the features of the invention. In the drawings:
Fig. 1 is an exploded isometric view of a slow cooker in accordance with an exemplary embodiment of the present invention,
Fig. 2 is an isometric view of the slow cooker of Fig. 1 with the housing omitted and the lid assembled relative to the cooking vessel.
Fig. 3 is an enlarged isometric view illustrating the motor handle detached from the lid handle saddle.
Fig. 4 is a top isometric view of the lid without any handle attached to the handle saddle.
Fig. 5 is an exploded isometric view of an exemplary motor handle.
Fig. 6 is an isometric view of an exemplary motor-free handle.
Fig. 7 is a cross-sectional view along line 7-7 of Fig. 6.
Fig. 8 is a top isometric view of an exemplary lid clip.
Fig. 9 is a side elevation view of the lid clip of Fig. 8,
Fig. 10 is an elevation view of an exemplary retaining pin of the lid clip of Fig. 8.
Fig. 11 is an isometric view of a slow cooker in accordance with another exemplary embodiment of the invention with the lid clip thereof in a locked position.
Fig. 12 is a side plan view of the slow cooker of Fig. 11 with the lid clip in the locked position.
Fig. 13 is an isometric view similar to Fig. 11 with the lid clip in an un-locked position.
Fig. 14 is an isometric view of an exemplary paddle.
Fig. 15 is a side elevation view of the exemplary paddle of Fig. 14.

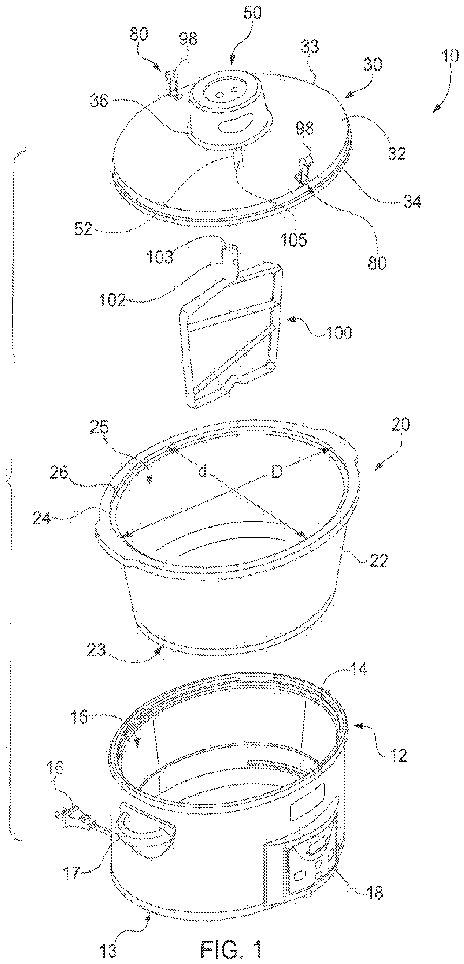

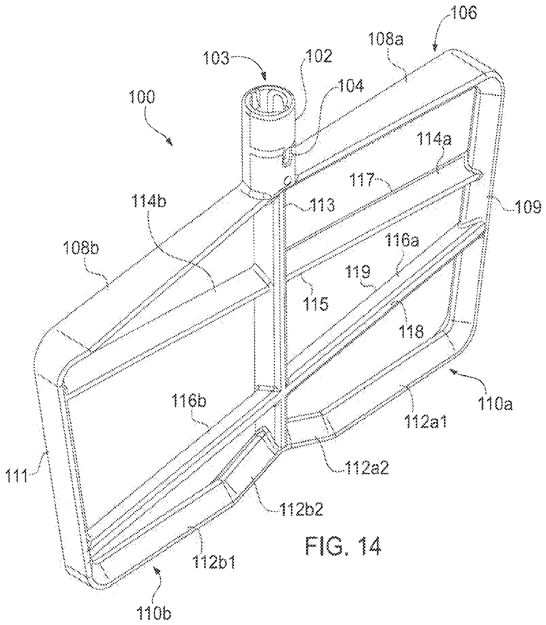

Fig. 1 6 is a bottom view of the exemplary paddle of Fig. 14.

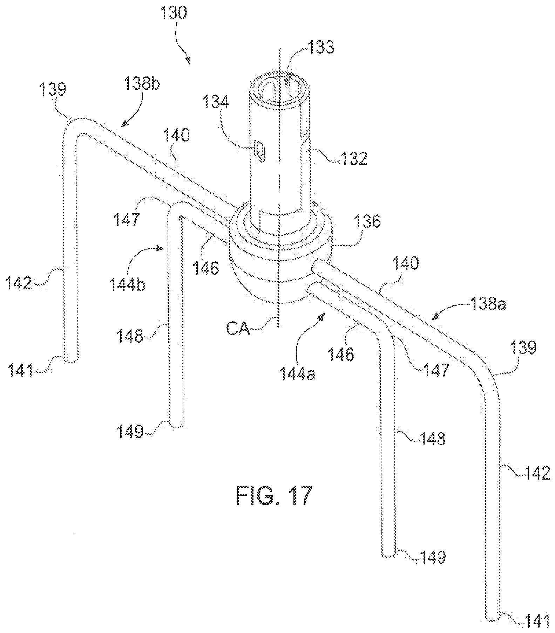

Fig. 17 is an isometric view of another exemplary paddle.

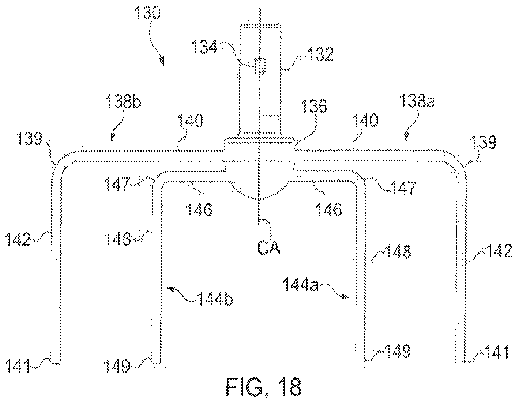

Fig. 18 is a front elevation view of the exemplary paddle of Fig. 17.

### DETAILED DESCRIPTION OF THE INVENTION

In the drawings, like numerals indicate like elements throughout. Certain terminology is used herein for convenience only and is not to be taken as a limitation on the present invention. For example, the terms front, back, left and right are utilized herein to assist with understanding of relative positioning, but are not intended to be limiting to an orientation of use of the device. The following describes a preferred embodiment of the present invention. However, it should be understood, based on this disclosure, that the invention is not limited by the preferred embodiment described herein.

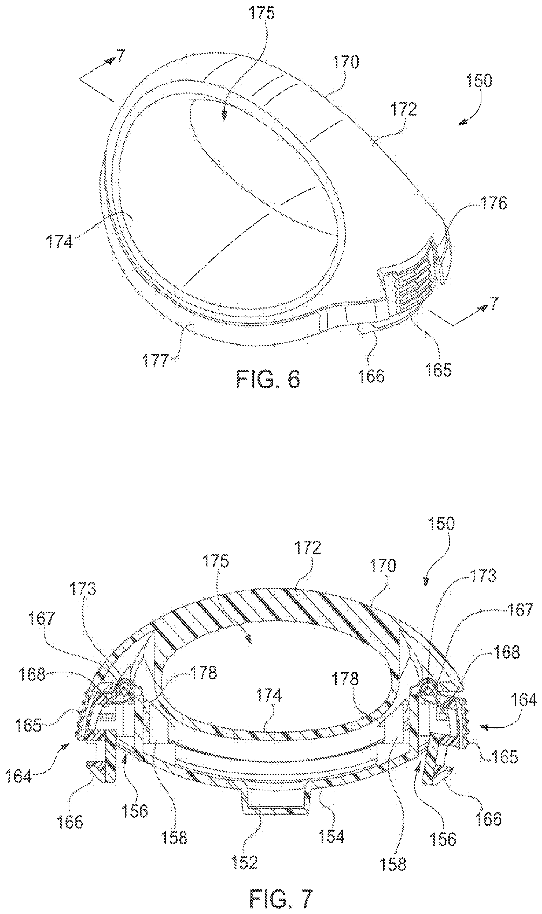

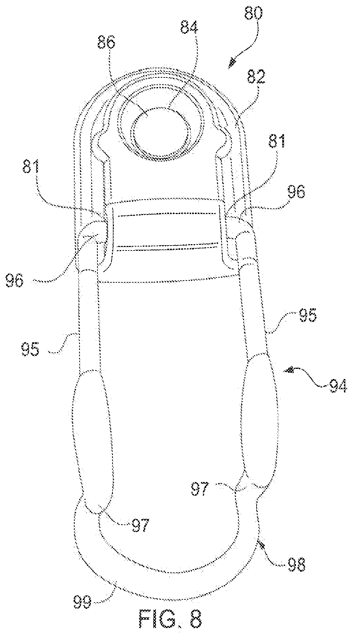

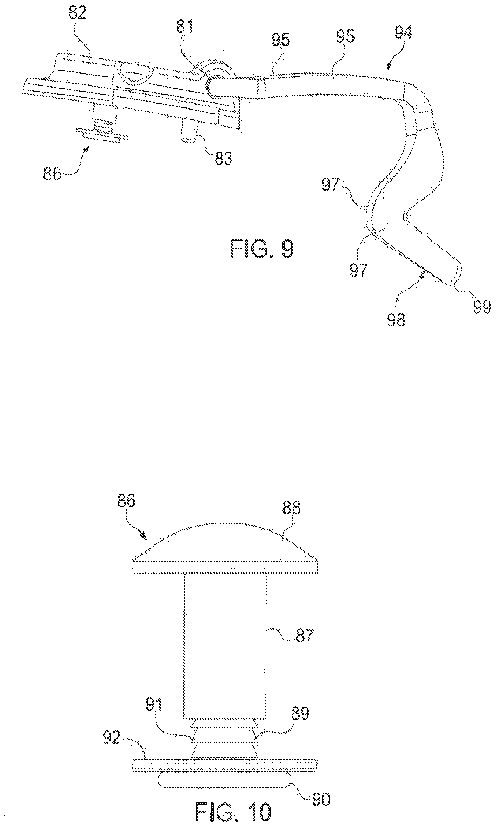

Referring to Figs. 1-10, a slow cooker in accordance with an exemplary embodiment of the invention will be described. The slow cooker 10 of the present embodiment generally comprises a housing 12, a cooking vessel 20, a lid 30, a motor handle 50, lid clips 80 and a stirring paddle 100. As explained in more detail below, the motor handle 50 and stirring paddle 100 may be removable and replaced with a non-motor handle 150 (see Fig. 6). Other features will be described in more detail below.

With reference to Fig. 1, the housing 12 may be as known in the prior art and generally includes an open ended container 14 extending from a closed end 13 to an open end 15. A heating element (not shown) is positioned within the container 14 and is configured to heat a cooking vessel 20 positioned within the container 14. The heating element may be powered by an electrical cord 16 or the like. A control panel 18 with corresponding electronic controls is associated with the heating element and the power source to control on/off and other functions of the slow cooker 10 as is known in the art Handles 17 (only one shown) may be provided on opposite sides of the container 14.

The cooking vessel 20 may also be as known in the prior art and generally includes an open ended vessel 22 extending from a closed end 23 to an open end 25. A flange or rim 24 extends radially outward from the vessel open end 25 and a lid receiving shoulder 26 is defined radially within the rim 24, The cooking vessel 20 has a configuration which complements the housing 12 configuration such that the cooking vessel 20 is removably positionable within the housing container 14 with the rim 24 extending outwardly of the container open end 15. In the illustrated embodiment, the housing container 14 and the cooking vessel 20 each have an elliptical configuration with the open ended vessel 22 having a major axis inner diameter D and a minor axis inner diameter d. The cooking vessel 20 is preferably made from earth ware (stoneware) but may be manufactured from glazed ceramic, porcelain, metal, or other suitable material known to one of ordinary skill in the art In other embodiments, the cooking vessel 20 maybe round, oblong or other shape and any capacity such as 1 quart, 2.5 quart, 3.5 quart or other capacity.

Referring to Figs. 1-4, the lid 30 has a generally dome shaped body 32 with an outer perimeter 33 which corresponds to the configuration of the vessel shoulder 26. A sealing element 34, for example, an elastomeric gasket, may be positioned around the perimeter 33. A handle saddle 36 is positioned on the lid body 32, preferably at the center thereof. In an exemplary embodiment, the lid body 32 is transparent and manufactured from glass, and the handle saddle 36 is manufactured from a thermoplastic material or the like. In such an embodiment, the saddle 36 is secured to the lid body 32 using screws, rivets, snap-fit posts or the like. Alternatively, the lid body 32 and the saddle 36 may be manufactured as a unitary component.

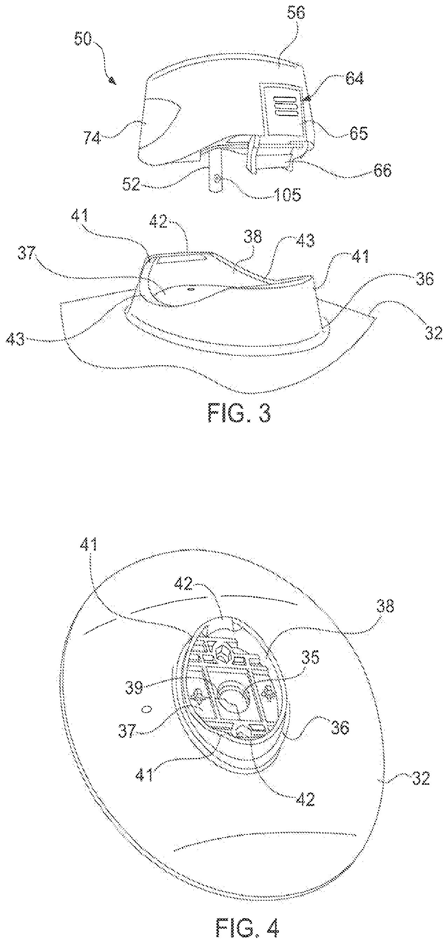

Referring to Figs. 3 and 4, the handle saddle 36 is configured for removable attachment of the motor handle 50 (or a non-motor handle 150 as described below) and includes a base plate 37 with a perimeter wall 38 extending up therefrom. The base plate 37 includes a central aperture 39 which is coaxial with an aperture 35 through the lid body 32. As explained in more detail hereinafter, the apertures 35, 39 facilitate passage of the motor shaft 52 through the lid 30 and into releasable engagement with a stirring paddle 100.

In the illustrated embodiment, the perimeter wall 38 includes raised end portions 41 and recessed side portions 43. Each raised end portion 41 defines an internal latch shoulder 42 configured to engage the handle latches 64 as described below. The configuration of the raised end portions 41 and the recessed side portions 43 allow the handle latches 64 of the motor handle 50 to engage the shoulders 42 without the latches 64 having to extend beyond the motor housing 56. Other configurations may be utilized. Furthermore, specific shapes, angles, contours and the like of the saddle 36 may be chosen based on the aesthetic appearance of the saddle, alone or in conjunction with either handle 50, 150.

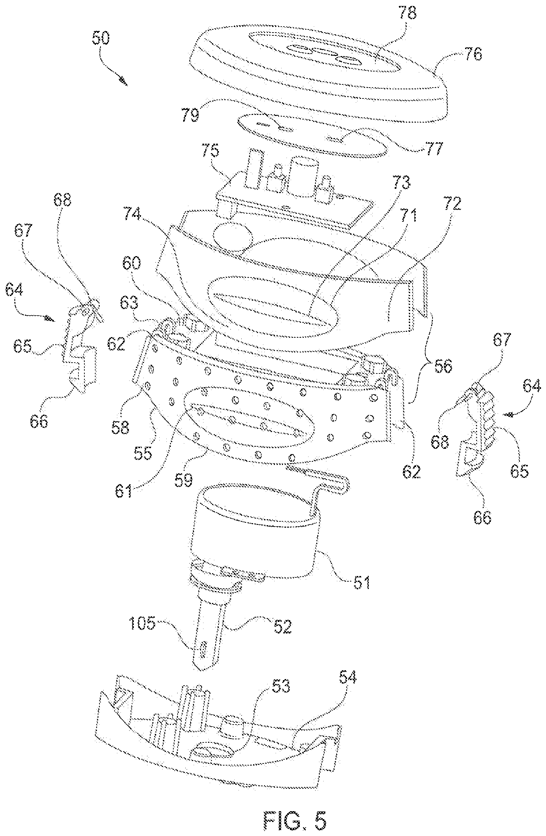

Referring to Fig. 5, an exemplary motor handle 50 will be described. The motor handle 50 includes a base plate 54 which supports a motor 51 with the motor shaft 52 extending through an aperture 53 in the base plate 54. The motor 51 may be for example a 5 watt synchronous motor configured to deliver, for example, approximately 17 inch-pounds of torque at 2.5 rpm. Other motors, of different type and different specifications, may be utilized.

In the exemplary embodiment, the motor 51 is housed within a two-piece housing 56. The inner housing member 55 includes a top plate 60 from which depends a perimeter wall 58. The perimeter wall 58 defines extended side portions 59 which correspond with the recessed portions 43 of the saddle 36. The extended side portions 59 provide sufficient depth for the motor 51 to fit between the base plate 54 and the inner housing member 55. A detent 61 is preferably defined into each extended side portion 59 to define a grip area for the motor handle 50.

Each end of the perimeter wall 58 defines a latch slot 62 into which a respective latch 64 is positioned. The latch slots 62 preferably include post receiving apertures 63 which pivotally support the latch 64. Each latch 64 has an outer actuation area 65 from which depends an engagement projection 66. A pivot connection 67 is provided at the end opposite the engagement projection 66 and is configured to pivotally connect with the post receiving apertures 63. A spring 68 or other biasing member is positioned between the latch 64 and the inner housing member 55 to bias the latch 64 and thereby the engagement projection 66 radially outward.

Outer housing member 70 has a perimeter wall 71 with an open upper end 72. The perimeter wall 71 includes extended side portions 73 with detents 74 which correspond to the extended side portions 59 and detents 61 of the inner housing member 55. The outer housing member 70 is positioned over the inner housing member 55 such that the latches 64 are secured between the inner and outer housing members 55, 71. When it is desired to utilize the motor handle 50 with the lid 30, the shaft 52 is extended through the apertures 35, 39 and the latch engagement projections 66 are brought into engagement with the latch shoulders 42 of the saddle 36. To remove the motor handle 50, the actuation areas 65 are pressed such that the engagement projections 66 disengage. While a two-piece housing 56 is described, the housing may be a unitary structure with the latches 64 otherwise secured. Additionally, while various functional features of the motor handle 50 have been described, it is recognized that specific shapes, angles, contours and the like of the handle 50 may be chosen based on the aesthetic appearance of the handle, alone or in conjunction with the saddle 36.

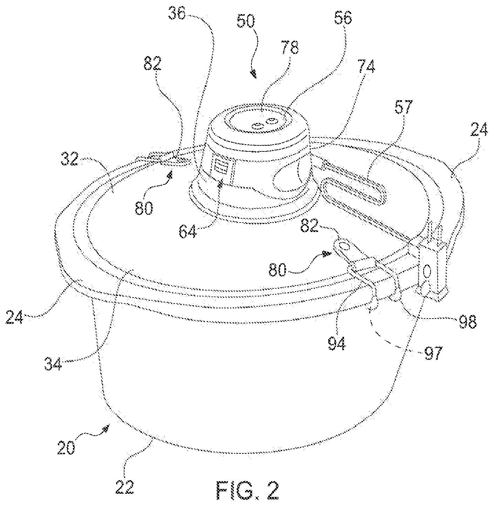

To control the motor 51, the top plate 60 supports a control board 75, for example, a printed circuit board, which communicates with the motor 51. A top cover 76 connects to the top plate 60 such that the control board 75 is housed therebetween. The top cover 76 is positioned over control buttons 77, 79 to control operation of the motor 51 and a covering 78 may be provided over the buttons 77, 79, As illustrated in Fig. 2, a power cord 57 which is separate from the power cord 16, provides power to the control board 75 and motor 51. Alternatively, the motor handle 50 may be configured to connect to the housing power source. Other power means, for example, battery power, may alternatively be utilized.

In a preferred mode of operation, the control board 75 is configured to operate the motor 51 in a pre-programmed sequence which causes rotation of the shaft 52 and thereby stirring via an attached paddle 100, 130 (Figs. 14 and 17, respectively) in a sequenced manner. In an exemplary embodiment, upon activation, the control board 75 is configured to wait a pre-determined amount of time before any rotation, for example, about 2 hours. In this way, the food items have an initial "cook down" period before any stirring. After the pre-determined wait period, the control board 75 is configured to automatically operate the motor 51 at regular intervals for a pre-determined amount of time. As an example, the control board 75 may be configured to operate the motor 51 for five minutes every half hour beginning at the end of the predetermined wait period. It has been found that such spaced stirring for given periods achieves the benefits of stirring without causing the food items to burn which may occur with too much stirring,

While the exemplary motor handle 50 includes two buttons 77, 79 to turn on and off the pre-programmed sequence, it is contemplated that the motor handle 50 may be provided with more controls to allow the user to vary the stirring. For example, the user may alter the amount of time for the wait period, the amount of time between stirring intervals, or the length of time of each stirring interval. It is recognized that other stirring sequences may be utilized, including continuous stirring.

In some instances, a user may wish to use the slow cooker 10 without any stirring. Referring to Figs. 6 and 7, an exemplary non-motor handle 150 which can be utilized with the lid 30 when automated stirring is not desired will be described. The exemplary handle 150 includes a base plate 154 configured to complement the configuration of the saddle 36. A plug 152 extends from the base plate 154 and is configured to plug the apertures 35, 39 when the handle 150 is attached to the lid 30. Each lateral end of the base plate 154 includes a latch slot 156 configured to receive a respective latch 164. The latches 164 are similar to the latches 64 and include an outer actuation area 165 from which depends an engagement projection 166. A pivot connection 167 is provided at the end opposite the engagement projection 166 and is configured to pivotally connect with the posts 173 provided on an upper handle member 1 70. Alternatively, the posts 173 may be provided on the base plate 154. A spring 168 or other biasing member is positioned between the latch 164 and the upper handle member 170 to bias the latch 164 and thereby the engagement projection 166 radially outward.

The upper handle member 170 includes a handle portion 172 and a base portion 174 with an opening 175 therebetween. The base portion 174 includes a depending perimeter skirt 177 and is configured to enclose the base plate 154 therein. In the illustrated embodiment, posts 158 extending from the base plate 154 snap-fittingly engage within corresponding openings 178 in the upper handle member 170 to connect the components together. Slots 176 in the upper handle member 170 align with the latches 164 such that each actuation area 165 extends in a respective slot 176. When it is desired to utilize the non-motor handle 150 with the lid 30, the handle 150 is positioned relative to the saddle 36 such that the plug 152 extends into the apertures 35, 39 and the latch engagement projections 166 are brought into engagement with the latch shoulders 42 of the saddle 36. To remove the motor handle 150, the actuation areas 165 are pressed such that the engagement projections 166 disengage. While various functional features of the non-motor handle 150 have been described, it is recognized that specific shapes, angles, contours and the like of the handle 150 may be chosen based on the aesthetic appearance of the handle, alone or in conjunction with the saddle 36.

While the motor handle 50 and non-motor handle 150 are described with latches 64, 164 configured to engage latch shoulders 42 of the saddle 36, it is recognized that other releasable attachment mechanisms may be utilized to attach the handles 50, 150 to the saddle 36.

Referring to Figs. 1, 2 and 8-10, the lid 30 preferably includes a pair of lid clips 80 configured to secure the lid 30 relative to the cooking vessel 20. The exemplary lid clips 80 include an attachment body 82 configured to be positioned adjacent the lid body 32 and secured thereto. The attachment body 82 includes a depending post 83 configured to be received in a corresponding hole (not shown) in the lid body 32. The attachment body 82 also includes a through hole 84 configured for passage of a securing peg 86. The securing peg 86 includes an outer shaft 87 configured to pass through the through hole 84 and also a corresponding hole (not shown) in the lid body 32. A head 88 on the outer shaft 87 is sized to fit within a recess in the attachment body 82 but not to pass through the through opening 84. The securing peg 86 also includes an inner shaft 89 with a series of ratchets 91 thereon configured to be received within the outer shaft 87 such that the ratchets 91 engage an internal rim or the like (not shown) to secure the shafts 87, 89 together. A resilient member 92 is positioned about the inner shaft 89 and is retained by a head 90. Interconnection of the shafts 87, 89 secures the attachment body 82 to the lid body 32.

Each lid clip 80 further includes a vessel engaging member 94 configured to pivot relative to the attachment body 82 and to selectively engage the vessel rim 24. In the present embodiment, the engaging member 94 is formed from a wire having a pair of legs 95. Each leg 95 has a free end 96 configured to pivotally engage a respective pivot opening 81 defined on opposite sides of the attachment body 82. The opposite ends of the legs 95 curve inward to engagement protrusions 97. Beyond the protrusions, the legs 95 are interconnected at 99. A respective cover member 98 made of an elastic material or the like may be provided over the engagement protrusions 97 to cushion between the engagement protrusions 97 and the vessel rim 24. The engaging member 94 has a resiliency such that the engagement protrusions 97 can be snapped over the vessel rim 24 to lock the lid 30 relative to the vessel 20 and flexed in the opposite direction to unlock the lid relative to the vessel 20.

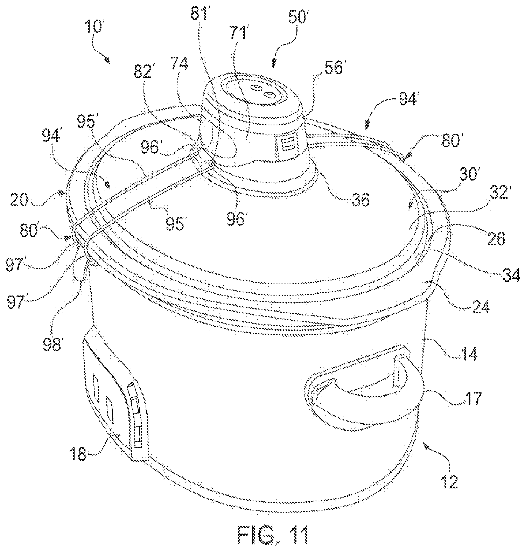

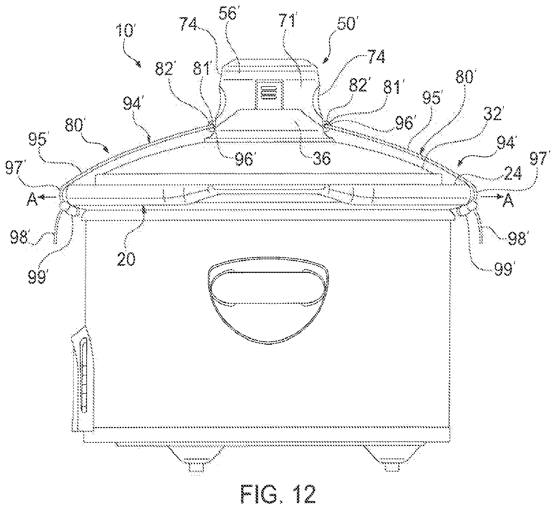

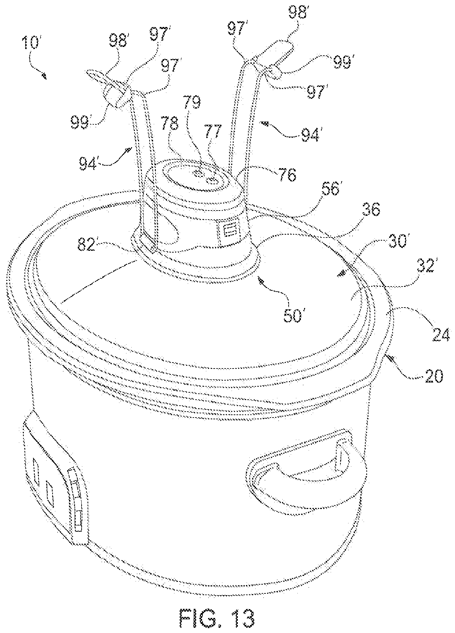

With reference to Figs. 11-13, a slow cooker 10' with alternative lid clips 80' attached to the lid 30' will be described. Other than the differences described, the slow cooker 10' is substantially the same as the slow cooker 10. In the present embodiment, each clip 80' includes an attachment body 82' which is formed integrally along the outer housing perimeter wall 71' of the motor housing 56' of the motor handle 50'. In this regard, no additional holes are required through the lid body 32'. In the exemplary embodiment, each attachment body 82' extends below a respective detent 74. The opposed ends of the attachment body 82' define pivot openings 81' configured to receive the free ends 96' of the legs 95' of the engaging member 94'. The opposite ends of the legs 95' define the engagement protrusions 97', In the present embodiment, the legs 95' are joined by a cover member 99' with a flexing handle 98' The flexing handle 98' allows the engagement protrusions 97' and cover member 99' to be flexed from engagement with the vessel rim 24 as illustrated by the arrows A in Fig. 12. The engaging members 94' may then be pivoted to the position in Fig. 13. In another alternative embodiment not shown, the attachment bodies 82' are attached to the saddle 36 rather than the motor housing 56'.

Turning to Figs. 14-16, an exemplary stirring paddle 100 for use with the slow cooker 10 of the present invention will be described. The paddle 100 includes a shaft 102 with an open end 103 configured to receive and releasably secure the motor shaft 52. In the illustrated embodiment, the shaft 102 includes a sidewall opening 104 configured to receive and retain a biased ball 105 or the like extending from the shaft 52 (see Figs. 3 and 5). The biasing on the ball 105 maintains engagement between the shafts 52, 102, but will release the engagement if a sufficient axial force away from the lid 30 is applied to the paddle 100 when it is desired to remove the paddle 100.

An outer frame 106 depends from the shaft 102 and is defined by upper arms 108a, 108b, side arms 109, 111, and lower arms 110a, 110b. A joining arm 113 extends from the upper arms 108a, 108b to the lower arms 110a, 110b along the central axis CA. The upper arms 108a, 108b have a combined width greater than that of the lower arms 110a, 110b such that the side arms 109 and 111 taper inward moving from upper to lower. The maximum width W of the outer frame 106 is defined by the upper arms 108a, 108b and is of a dimension slightly less than the minor axis diameter d of the cooking vessel 20 such that the paddle 100 is free to rotate within the vessel 20.

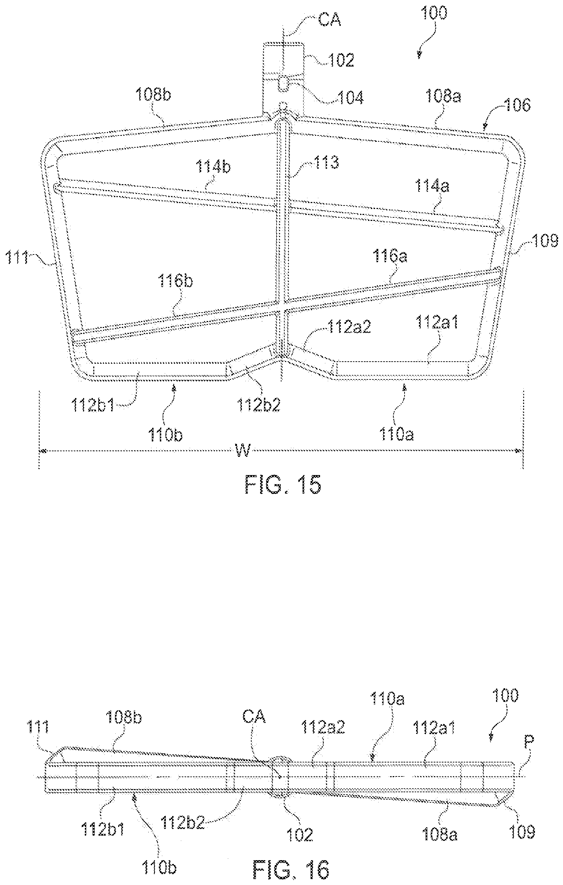

As illustrated in Fig. 15, in the illustrated embodiment, each of the upper arms 108a, 108b extends downward moving from the central axis CA radially outward. Each of the lower arms 110a, 110b is comprised of two segments, an outer segment 112a1, 112b1 which is substantially perpendicular to the central axis CA and an inner segment 112a2, 112b2 which angles from the outer segment radially inward toward the central axis CA.

Upper intermediate arms 114a, 114b extend between the side arms 109 and 111 and intersect with the joining arm 113. The intermediate arms 114a, 114b extend at a substantially continuous angle relative to the central axis CA such that intermediate arm 114a is substantially parallel with upper arm 108a while intermediate arm 114b angles toward upper arm 108b moving from the central axis CA outward. Lower intermediate arms 116a, 116b extend between the side arms 109 and 111 and intersect with the joining arm 113. The intermediate arms 116a, 1 16b extend at a substantially continuous angle relative to the central axis CA, but opposite the upper intermediate arms 114a, 114b such that intermediate arm 116b is substantially parallel with upper arm 108b while intermediate arm 116a angles toward upper arm 108a moving from the central axis CA outward.

Referring to Fig. 16, the outer frame 106 is preferably twisted about the central axis CA such that the upper arm 108a is on one side of the plane P extending through the lower arms 110a and 112a, 110b and 112b and central axis CA and the other upper arm 108b is on the opposite side of the plane P. Each of the lower arms 110a, 110b and the intermediate arms 114a, 114b, 116a, 116b is co-planar with the plane P.

In the illustrated embodiment, each of the arms of the outer frame 106 has a generally triangular cross-section with the wider portion of each arm 108-111 facing radially outward and the narrower portion facing radially inward. The intermediate arms 114a, 114b also have a generally triangular cross-section but configured such that narrower portion 115 faces forward in Fig. 14 while the wider portion 117 faces rearward. Opposite thereto, the intermediate arms 116a, 116b have a configuration wherein the wider portion 118 faces forward in Fig. 14 while the narrower portion 1 1 9 faces rearward. While various functional features of the paddle 100 have been described, it is recognized that specific shapes, angles, contours and the like of the paddle 100 may be chosen based on the aesthetic appearance of the paddle.

Referring to Figs. 17 and 18, another exemplary stirring paddle 130 for use with the slow cooker 10 of the present invention will be described. The paddle 130 includes a shaft 132 with an open end 133 configured to receive and releasably secure the motor shaft 52. In the illustrated embodiment, the shaft 132 includes a sidewall opening 134 configured to receive and retain a biased ball 105 or the like extending from the shaft 52 (see Figs. 3 and 5). The biasing on the ball 105 maintains engagement between the shafts 52, 132, but will release the engagement if a sufficient axial force away from the lid 30 is applied to the paddle 130 when it is desired to remove the paddle 130.

A central hub 136 extends from the opposite end of the shaft 132. A pair of outer stirring wires 138a, 138b extend in opposite directions from the hub 136. Each stirring wiring 138a, 138b includes a central portion 140 extending from the hub 136 radially outward substantially perpendicular to the central axis CA, to a transition portion 139 which joins to an outer portion 142 extending substantially parallel to the central axis CA and terminating in a free end 141. The opposed outer stirring wires 138a, 138b define a maximum width W which is slightly less than the minor axis diameter d of the cooking vessel 20 such that the paddle 130 is free to rotate within the vessel 20. Inward thereof, a pair inner stirring wires 144a, 144b extend in opposite directions from the hub 136. Similarly, each stirring wiring 144a, 144b includes a central portion 146 extending from the hub 136 radially outward substantially perpendicular to the central axis CA, to a transition portion 147 which joins to an outer portion 148 extending substantially parallel to the central axis CA and terminating in a free end 149. In the illustrated embodiment, each of the stirring wires 138a, 138b, 144a, 144b are co-planar, however, the wires may be otherwise configured. Additionally, the paddle 130 may include more or fewer wires than in the illustrated exemplary embodiment. Furthermore, while various functional features of the paddle 130 have been described, it is recognized that specific shapes, angles, contours and the like of the paddle 130 may be chosen based on the aesthetic appearance of the paddle.

While two exemplary paddles 100, 130 are described herein, it is recognized that the motor handle 50 may be utilized with any number of paddles with various configurations.

These and other advantages of the present invention will be apparent to those skilled in the art from the foregoing specification. Accordingly, it will be recognized by those skilled in the art that changes or modifications may be made to the above-described embodiments without departing from the broad inventive concepts of the invention. It should therefore be understood that this invention is not limited to the particular embodiments described herein, but is intended to include all changes and modifications that are within the scope of the invention as defined in the claims.

## Claims

1. A slow cooker (10) comprising:
a housing (12) with a heating element positioned therein;
a cooking vessel (20) configured to be positioned within the housing (12) for heating via the heating element, the cooking vessel (20) have a generally open end (25);
a lid (30) configured to be positioned on the cooking vessel (20) to substantially close the generally open end of the cooking vessel (20); and
a handle;
**characterized in that** the lid (30) defines an aperture therethrough and has a saddle (36) positioned about the aperture (35); and
**in that** the handle is configured to releasably attach to the saddle (36), the handle being either a non-motor handle (150) having a plug (152) or a motor handle (50), the motor handle (50) and the non-motor handle (150) being interchangeably releasably attached to the saddle (36), the motor handle (50) having a motor shaft (52) extending therefrom and configured to pass into the lid aperture (35) when the handle (50) is attached to the saddle (36).

2. The slow cooker (10) according to claim 1 wherein the handle (50) includes a housing (56) with a motor (51) positioned therein, the motor shaft (52) extending from the motor (51) and controllably rotated thereby.

3. The slow cooker (10) according to claim 2 wherein the handle (50) includes a control board (75) positioned within the housing (56) of the handle (50) and configured to control operation of the motor (51).

4. The slow cooker (10) according to claim 3 wherein the handle (50) includes at least one external control button (77, 79) associated with the control board (75).

5. The slow cooker (10) according to claim 2 wherein the handle housing (56) includes opposed detents (61) which define a grip area for the handle (50).

6. The slow cooker (10) according to claim 2 wherein the motor shaft (52) is releasably connectable with a paddle (100) positioned within the cooking vessel (20).

7. The slow cooker (10) according to claim 6 wherein the paddle (100) includes a paddle shaft (102) engageable with the motor shaft (52) and an outer frame (106) depending from the paddle shaft (102), the outer frame (106) defined by an upper arm (108a, 108b), a lower arm (110a, 110b) and a pair of opposed side arms (109, 111) extending therebetween.

8. The slow cooker (10) according to claim 7 wherein the upper arm (108a, 108b) has a width greater than the lower arm (110a, 110b) and each of the side arms (109, 111) tapers inwardly moving from the upper (108a, 108b) arm to the lower arm (110a, 110b).

9. The slow cooker (10) according to claim 7 further comprising at least one intermediate arm (114a, 114b) extending between the side arms (109, 111) at a non-perpendicular angle relative to a central axis (CA) of the paddle shaft (102).

10. The slow cooker (10) according to claim 7 wherein the outer frame (106) is twisted about a central axis (CA) of the paddle (100) such that a portion of the upper arm (108a, 108b) extends on one side of a plane (P) extending through the central axis (CA) and the lower arm (110a, 100b) and another portion of the upper arm (108a, 108b) extends on an opposite side of the plane.

11. The slow cooker (10) according to claim 6 wherein the paddle (100) includes a paddle shaft (102) engageable with the motor shaft (52) and at least two stirring wires (138a, 138b) extending outwardly relative to the paddle shaft (102), each stirring wire (138a, 138b) including a central portion (140) extending substantially perpendicular to a central axis (CA) of the paddle shaft (102) and outer portion (142) extending substantially parallel to the central axis (CA) and terminating in a free end (141).

12. The slow cooker (10) according to claim 1 wherein the non-motor handle (150) includes a base plate (154) which defines the plug (152) and an upper handle member (170) attached to the base plate (154) which defines a gripping area.

13. The slow cooker (10) according to claim 12 wherein the upper handle member (170) includes a base portion (174) attached to the base plate (154) and an arcuate handle portion (172) with an opening (175) between the base portion (174) and the handle portion (172).

14. The slow cooker (10) according to claim 1 wherein the non-motor handle (150) includes at least one pivotal latch (164) configured to engage a corresponding shoulder (42) defined by the saddle (36).

15. The slow cooker (10) according to claim 14 wherein the non-motor handle (150) includes two pivotal latches (164, 164) at opposed ends and the saddle (36) includes two corresponding shoulders (42, 42) at opposed ends.

## Patentansprüche

1. Schongarer (10), umfassend:
ein Gehäuse (12) mit einem darin angeordneten Heizelement,
ein Kochgefäß (20), das dazu ausgebildet ist, innerhalb des Gehäuses (12) zum Erhitzen mittels des Heizelements angeordnet zu werden, wobei das Kochgefäß (20) ein im Wesentlichen offenes Ende (25) aufweist,
einen Deckel (30), der dazu ausgebildet ist, auf dem Kochgefäß (20) angeordnet zu werden, um das im Wesentlichen offene Ende des Kochgefäßes (20) weitestgehend zu verschließen, und
einen Griff,
**dadurch gekennzeichnet, dass** der Deckel (30) eine Öffnung durch diesen hindurch definiert und einen Sattel (36) aufweist, der um die Öffnung (35) herum angeordnet ist, und
dadurch, dass der Griff dazu ausgebildet ist, sich lösbar an dem Sattel (36) anzufügen, wobei der Griff entweder ein Nichtmotorgriff (150), der einen Verschlussstopfen (152) aufweist, oder ein Motorgriff (50) ist, wobei der Motorgriff (50) und der Nichtmotorgriff (150) austauschbar lösbar an dem Sattel (36) angefügt sind, wobei der Motorgriff (50) eine sich davon weg erstreckende Motorwelle (52) aufweist, die dazu ausgebildet ist, in die Deckelöffnung (35) hinein zu verlaufen, wenn der Griff (50) an dem Sattel (36) angefügt ist.

2. Schongarer (10) nach Anspruch 1, wobei der Griff (50) ein Gehäuse (56) mit einem darin angeordneten Motor (51) umfasst, wobei sich die Motorwelle (52) von dem Motor (51) weg erstreckt und von diesem kontrolliert gedreht wird.

3. Schongarer (10) nach Anspruch 2, wobei der Griff (50) eine Steuerplatine (75) umfasst, die innerhalb des Gehäuses (56) des Griffs (50) angeordnet und dazu ausgebildet ist, den Betrieb des Motors (51) zu steuern.

4. Schongarer (10) nach Anspruch 3, wobei der Griff (50) mindestens einen externen Bedientaster (77, 79), der mit der Steuerplatine (75) verbunden ist, umfasst.

5. Schongarer (10) nach Anspruch 2, wobei das Griffgehäuse (56) gegenüberliegende Rasten (61) umfasst, die einen Greifbereich für den Griff (50) definieren.

6. Schongarer (10) nach Anspruch 2, wobei die Motorwelle (52) mit einem Paddel (100) lösbar verbunden werden kann, das innerhalb des Kochgefäßes (20) angeordnet ist.

7. Schongarer (10) nach Anspruch 6, wobei das Paddel (100) eine Paddelwelle (102), die mit der Motorwelle (52) in Eingriff gebracht werden kann, und einen äußeren Rahmen (106), der von der Paddelwelle (102) herabhängt, umfasst, wobei der äußere Rahmen (106) durch einen oberen Arm (108a, 108b), einen unteren Arm (110a, 110b) und ein Paar von sich dazwischen erstreckenden entgegengesetzten Seitenarmen (109, 111) definiert ist.

8. Schongarer (10) nach Anspruch 7, wobei der obere Arm (108a, 108b) eine Breite aufweist, die größer als die des unteren Armes (110a, 110b) ist, und jeder der Seitenarme (109, 111) sich von dem oberen Arm (108a, 108b) zu dem unteren Arm (110a, 110b) hin einwärts verjüngt.

9. Schongarer (10) nach Anspruch 7, ferner umfassend mindestens einen Zwischenarm (114a, 114b), der sich zwischen den Seitenarmen (109, 111) in einem nicht rechten Winkel relativ zu einer Mittelachse (CA) der Paddelwelle (102) erstreckt.

10. Schongarer (10) nach Anspruch 7, wobei der äußere Rahmen (106) um eine Mittelachse (CA) des Paddels (100) derart verwunden ist, dass sich ein Abschnitt des oberen Arms (108a, 108b) auf einer Seite einer Ebene (P) erstreckt, die sich durch die Mittelachse (CA) und den unteren Arm (110a, 100b) erstreckt, und ein anderer Abschnitt des oberen Arms (108a, 108b) sich auf einer entgegengesetzten Seite der Ebene erstreckt.

11. Schongarer (10) nach Anspruch 6, wobei das Paddel (100) eine Paddelwelle (102), die mit der Motorwelle (52) in Eingriff gebracht werden kann, und mindestens zwei Rührdrähte (138a, 138b), die sich relativ zu der Paddelwelle (102) nach außen erstrecken, umfasst, wobei jeder Rührdraht (138a, 138b) einen mittleren Abschnitt (140), der sich im Wesentlichen im rechten Winkel zu einer Mittelachse (CA) der Paddelwelle (102) erstreckt, und einen äußeren Abschnitt (142), der sich im Wesentlichen parallel zu der Mittelachse (CA) erstreckt und in einem freien Ende (141) endet, umfasst.

12. Schongarer (10) nach Anspruch 1, wobei der Nichtmotorgriff (150) eine Basisplatte (154), die den Verschlussstopfen (152) definiert, und ein oberes Griffelement (170), das an der Basisplatte (154) befestigt ist und einen Greifbereich definiert, umfasst.

13. Schongarer (10) nach Anspruch 12, wobei das obere Griffelement (170) einen Basisabschnitt (174), der an der Basisplatte (154) befestigt ist, und einen bogenförmigen Griffabschnitt (172) mit einer Öffnung (175) zwischen dem Basisabschnitt (174) und dem Griffabschnitt (172), umfasst.

14. Schongarer (10) nach Anspruch 1, wobei der Nichtmotorgriff (150) mindestens einen schwenkbare Riegel (164) umfasst, der dazu ausgebildet ist, mit einer entsprechenden Schulter (42), die durch den Sattel (36) definiert wird, in Eingriff zu gelangen.

15. Schongarer (10) nach Anspruch 14, wobei der Nichtmotorgriff (150) zwei schwenkbare Riegel (164, 164) an gegenüberliegenden Enden umfasst und der Sattel (36) zwei entsprechende Schultern (42, 42) an gegenüberliegenden Enden umfasst.

## Revendications

1. Mijoteuse (10) comprenant :
un logement (12) avec un élément de chauffage positionné à l'intérieur de ce dernier ;
un récipient de cuisson (20) configuré pour être positionné à l'intérieur du logement (12) pour le chauffage via l'élément de chauffage, le récipient de cuisson (20) a une extrémité généralement ouverte (25) ;
un couvercle (30) configuré pour être positionné sur le récipient de cuisson (20) pour fermer sensiblement l'extrémité généralement ouverte du récipient de cuisson (20) ; et
une poignée ;
**caractérisée en ce que** le couvercle (30) définit une ouverture à travers ce dernier et a une selle (36) positionnée autour de l'ouverture (35) ; et
**en ce que** la poignée est configurée pour se fixer de manière amovible à la selle (36), la poignée étant soit une poignée non motorisée (150) ayant un bouchon (152) soit une poignée motorisée (50), la poignée motorisée (50) et la poignée non motorisée (150) étant fixées de manière amovible et interchangeable à la selle (36), la poignée motorisée (50) ayant un arbre de moteur (52) s'étendant à partir de cette dernière et configuré pour passer dans l'ouverture de couvercle (35) lorsque la poignée (50) est fixée à la selle (36).

2. Mijoteuse (10) selon la revendication 1, dans laquelle la poignée (50) comprend un logement (56) avec un moteur (51) positionné à l'intérieur de ce dernier, l'arbre de moteur (52) s'étendant à partir du moteur (51) et pouvant tourner de manière contrôlable grâce à ce dernier.

3. Mijoteuse (10) selon la revendication 2, dans laquelle la poignée (50) comprend un tableau de commande (75) positionné à l'intérieur du logement (56) de la poignée (50) et configuré pour commander le fonctionnement du moteur (51).

4. Mijoteuse (10) selon la revendication 3, dans laquelle la poignée (50) comprend au moins un bouton de commande externe (77, 79) associé au tableau de commande (75).

5. Mijoteuse (10) selon la revendication 2, dans laquelle le logement de poignée (56) comprend des crans (61) opposés qui définissent une zone de préhension pour la poignée (50).

6. Mijoteuse (10) selon la revendication 2, dans laquelle l'arbre de moteur (52) peut être raccordé de manière amovible avec une palette (100) positionnée à l'intérieur du récipient de cuisson (20).

7. Mijoteuse (10) selon la revendication 6, dans laquelle la palette (100) comprend un arbre de palette (102) pouvant être mis en prise avec l'arbre de moteur (52) et un bâti externe (106) dépendant de l'arbre de palette (102), le bâti externe (106) étant défini par un bras supérieur (108a, 108b), un bras inférieur (110a, 110b), et une paire de bras latéraux (109, 111) opposés s'étendant entre eux.

8. Mijoteuse (10) selon la revendication 7, dans laquelle le bras supérieur (108a, 108b) a une largeur supérieure au bras inférieur (110a, 110b) et chacun des bras latéraux (109, 111) se rétrécit progressivement vers l'intérieur en se déplaçant du bras supérieur (108a, 108b) au bras inférieur (110a, 110b).

9. Mijoteuse (10) selon la revendication 7, comprenant en outre au moins un bras intermédiaire (114a, 114b) s'étendant entre les bras latéraux (109, 111) à un angle non perpendiculaire par rapport à un axe central (CA) de l'arbre de palette (102).

10. Mijoteuse (10) selon la revendication 7, dans laquelle le bâti externe (106) est vrillé autour d'un axe central (CA) de la palette (100) de sorte qu'une partie du bras supérieur (108a, 108b) s'étend sur un côté d'un plan (P) s'étendant à travers l'axe central (CA) et le bras inférieur (110a, 100b) et une autre partie du bras supérieur (108a, 108b) s'étend sur un côté opposé du plan.

11. Mijoteuse (10) selon la revendication 6, dans laquelle la palette (100) comprend un arbre de palette (102) pouvant se mettre en prise avec l'arbre de moteur (52) et au moins deux fils d'agitation (138a, 138b) s'étendant vers l'extérieur par rapport à l'arbre de palette (102), chaque fil d'agitation (138a, 138b) comprenant une partie centrale (140) s'étendant de manière sensiblement perpendiculaire à un axe central (CA) de l'arbre de palette (102) et une partie externe (142) s'étendant de manière sensiblement parallèle à l'axe central (CA) et se terminant par une extrémité libre (141).

12. Mijoteuse (10) selon la revendication 1, dans laquelle la poignée non motorisée (150) comprend une plaque de base (154) qui définit le bouchon (152) et un élément de poignée supérieur (170) fixé à la plaque de base (154) qui définit une zone de préhension.

13. Mijoteuse (10) selon la revendication 12, dans laquelle l'élément de poignée supérieur (170) comprend une partie de base (174) fixée sur la plaque de base (154) et une partie de poignée arquée (172) avec une ouverture (175) entre la partie de base (174) et la partie de poignée (172).

14. Mijoteuse (10) selon la revendication 1, dans laquelle la poignée non motorisée (150) comprend au moins un verrou pivotant (164) configuré pour mettre en prise un épaulement (42) correspondant défini par la selle (36).

15. Mijoteuse (10) selon la revendication 14, dans laquelle la poignée non motorisée (150) comprend deux verrous pivotants (164, 164) au niveau des extrémités opposées et la selle (36) comprend deux épaulements (42, 42) correspondants au niveau des extrémités opposées.
